# EUROPÄISCHE PATENTSCHRIFT

(11) **EP 4 079 122 B1**
(45) Veröffentlichungstag und Bekanntmachung des Hinweises auf die Patenterteilung: **27.03.2024**
(21) Anmeldenummer: 22163136.9
(22) Anmeldetag: 21.03.2022
(51) Int. Cl.: A01B 59/00, A01B 59/042, A01B 59/043, B60D 1/46

(54) **KUPPLUNGSANORDNUNG FÜR EINEN LANDWIRTSCHAFTLICHEN TRAKTOR**
COUPLING ARRANGEMENT FOR AN AGRICULTURAL TRACTOR
ENSEMBLE D'ACCOUPLEMENT POUR UN TRACTEUR AGRICOLE

(30) Priorität: 14.04.2021 DE 102021109322
(43) Veröffentlichungstag der Anmeldung: 26.10.2022
(73) Patentinhaber: Deere & Company, Moline, IL 61265 (US)
(72) Erfinder: HEITLINGER, Martin, 68163 Mannheim (DE); WOLK, Rainer, 68163 Mannheim (DE)
(74) Vertreter: Dehnhardt, Florian Christopher

(56) Entgegenhaltungen:
- EP-A1- 1 606 984
- EP-A1- 2 977 237
- EP-B1- 1 974 963
- DE-U1-202020 106 835
- GB-A- 1 014 954

## Beschreibung

Die Erfindung betrifft eine Kupplungsanordnung für einen landwirtschaftlichen Traktor, mit einem Hinterachsdifferentialgehäuse, ersten und zweiten Hubarmen, die im Bereich einer Oberseite des Hinterachsdifferentialgehäuses vertikal verschwenkbar angelenkt sind, einem hydraulischen Hubwerk zum Heben und Senken der Hubarme, und einer Zugvorrichtung, die im Bereich einer Unterseite des Hinterachsdifferentialgehäuses angebracht ist und die ein vertikal verschwenkbares Rahmenteil umfasst, in dem ein hydraulisch längsverschiebbares Führungsteil mit einem Kupplungsmittel zur Anbringung eines Anbau- oder Zusatzgeräts gelagert ist.

Eine derartige Kupplungsanordnung in Gestalt einer Zugvorrichtung für ein landwirtschaftliches Fahrzeug ist beispielsweise aus der DE 44 27 399 A1 bekannt. Die als sogenannte Pick-Up Hitch ausgebildete Zugvorrichtung umfasst ein Rahmenteil, das mittels hydraulisch betätigbarer Hubarme über stabförmige Hubstangen in vertikaler Richtung zwischen einer oberen Transportstellung und einer abgesenkten Kuppelstellung schwenkbar an einem Fahrzeugrumpf angelenkt ist. Das freie, verschwenkbare Ende des Rahmenteils nimmt ein vorstehendes, vom Rahmenteil geführtes und in diesem mittels eines Hydraulikzylinders ausfahrbares Kupplungselement zur Anbringung eines gezogenen Anbau- oder Zusatzgeräts auf. Eine Kupplungsanordnung gemäß dem Oberbegriff des Anspruchs 1 ist aus der GB 1 014 954 A bekannt.

Um verschiedene Gerätetypen abdecken zu können, ist in der Regel an dem landwirtschaftlichen Traktor neben der Pick-Up Hitch ein Dreipunkt-Kraftheber mit einem zentralen Oberlenker sowie ersten und zweiten Unterlenkern vorgesehen, die in einem unteren Bereich des Hinterachsdifferentialgehäuses schwenkbar angebracht sind. Die Unterlenker sind hierbei über eigene Hubstreben gleichfalls mit den hydraulisch betätigbaren Hubarmen verbunden.

Da die zur Anlenkung des Führungsteils vorgesehenen Hubstangen im Falle der DE 44 27 399 A1 als starre Gewindespindeln ausgebildet sind, lassen sich Pick-Up Hitch und Dreipunkt-Kraftheber in einem solchen Fall ausschließlich gemeinsam betätigen.

Handelsübliche Systeme sehen daher meist die Verwendung teleskopierbarer Hubstangen vor. Diese erlauben es ferner, die Pick-Up Hitch während des Betriebs des Dreipunkt-Krafthebers mittels eines Verriegelungsmechanismus in ihrer angehobenen Transportstellung zu arretieren. Der mögliche Schwenkbereich der Pick-Up Hitch in Richtung der abgesenkten Kuppelstellung wird dabei im Allgemeinen durch die baulängenbedingt limitierte Teleskopierbarkeit der Hubstangen begrenzt. Unter ungünstigen Bedingungen lässt sich das Kupplungsmittel daher nicht ausreichend tief in Richtung des Erdbodens absenken, um die Aufnahme eines daran anzubringenden Anbau- oder Zusatzgeräts zu ermöglichen.

Angesichts dessen ist es Aufgabe der vorliegenden Erfindung, eine hinsichtlich ihres Gebrauchsnutzens verbesserte Kupplungsanordnung der eingangs genannten Art anzugeben.

Diese Aufgabe wird durch eine Kupplungsanordnung mit den Merkmalen des Patentanspruchs 1 gelöst.

Die Kupplungsanordnung für einen landwirtschaftlichen Traktor umfasst ein Hinterachsdifferentialgehäuse, erste und zweite Hubarme, die im Bereich einer Oberseite des Hinterachsdifferentialgehäuses vertikal verschwenkbar angelenkt sind, ein hydraulisches Hubwerk zum Heben und Senken der Hubarme, und eine Zugvorrichtung, die im Bereich einer Unterseite des Hinterachsdifferentialgehäuses angebracht ist und die ein vertikal verschwenkbares Rahmenteil umfasst, in dem ein hydraulisch längsverschiebbares Führungsteil mit einem Kupplungsmittel zur Anbringung eines Anbau- oder Zusatzgeräts gelagert ist. Erfindungsgemäß ist das Rahmenteil über starre Hubstangen fester Länge mit den Hubarmen derart verbunden, dass sich dieses mittels des hydraulischen Hubwerks zwischen einer angehobenen Transportstellung und einer abgesenkten Kuppelstellung verschwenken lässt, wobei eine Halteanordnung vorgesehen ist, mittels derer an dem Hinterachsdifferentialgehäuse angelenkte erste und zweite Unterlenker eines Dreipunkt-Krafthebers ungeachtet einer Hubwerksbetätigung in einer angehobenen Außerbetriebsstellung arretierbar sind.

Die Halteanordnung ermöglicht es, die beim Betrieb der Pick-Up Hitch nicht benötigten Unterlenker des Dreipunkt-Krafthebers in einen hubwerksneutralen Zustand zu verbringen sowie darin zu sichern. Die zwischen den Hubarmen und den Unterlenkern verlaufenden Hubstreben des Dreipunkt-Krafthebers können dazu komplett abgenommen werden. Alternativ können diese auch an den Unterlenkern verbleiben und in einer am Hinterachsdifferentialgehäuse eigens vorgesehenen Aufnahmeeinrichtung verwahrt werden.

Im Ergebnis ist eine von den Unterlenkern des Dreipunkt-Krafthebers unabhängige Betätigung des Rahmenteils der Pick-Up Hitch möglich, sodass der seitens des hydraulischen Hubwerks zur Verfügung stehende Stellweg durch geeignete Wahl der Länge der Hubstangen dahingehend ausgenutzt werden kann, dass sich das am Rahmenteil angebrachte Kupplungsmittel in eine möglichst weit abgesenkte Kuppelstellung verbringen lässt.

Bei der Halteanordnung handelt es sich im einfachsten Fall um eine im Heckbereich des Hinterachsdifferentialgehäuses angebrachte Kette, an der der jeweilige Unterlenker in seiner angehobenen Außerbetriebsstellung mittels eines durch eine Unterlenkeraufnahmeöffnung hindurchgeführten Schäkels einhängbar ist.

Das Kupplungsmittel ist beispielsweise als Zughaken, Kupplungskugel oder Zugpendel ausgebildet. Dieses kann insbesondere lösbar an dem Rahmenteil angebracht sein, sodass ein Wechsel zwischen verschiedenen Kupplungstypen möglich ist.

Vorteilhafte Ausgestaltungen der erfindungsgemäßen Kupplungsanordnung gehen aus den Unteransprüchen hervor.

Vorzugsweise umfasst das hydraulische Hubwerk eine erste Sensoreinrichtung zur Ermittlung einer Lastgröße, die eine auf das Kupplungsmittel wirkende Vertikal- bzw. Stützlast F_{L} charakterisiert. Die von der ersten Sensoreinrichtung bereitgestellte Lastgröße kann einer Steuereinheit in Form entsprechender Sensorsignale zugeführt werden, wobei die Steuereinheit diese dahingehend auswertet, ob eine über das Kupplungsmittel von einem Anbau- oder Zusatzgerät auf die Pick-Up Hitch ausgeübte Vertikal- bzw. Stützlast F_{L} innerhalb zulässiger Grenzen liegt. Im Falle einer von der Steuereinheit erkannten Lastüberschreitung ist die Ausgabe eines entsprechenden Bedienerhinweises denkbar. Hierzu kommuniziert die Steuereinheit mit einer in einer Fahrerkabine des landwirtschaftlichen Traktors vorgesehenen akustischen und/oder visuellen Nutzerschnittstelle.

Bei der ersten Sensoreinrichtung kann es sich um wenigstens einen Drucksensor zur Erfassung eines in einem hydraulischen Stellmittel des Hubwerks auftretenden Arbeitsdrucks handeln.

Das hydraulische Stellmittel ist üblicherweise als zwischen einem der beiden Hubarme und einer zugehörigen Befestigungsstelle am Hinterachsdifferentialgehäuse verlaufender Hydraulikzylinder ausgebildet. Der Drucksensor dient hierbei der Erfassung der in einem lastseitigen Arbeitsraum des Hydraulikzylinders auftretenden Druckverhältnisse.

Des Weiteren besteht die Möglichkeit, dass das hydraulische Hubwerk eine zweite Sensoreinrichtung zur Überwachung eines an dem Rahmenteil einzuhaltenden Schwenkbereichs umfasst. Letzterer ist durch die angehobene Transportstellung einerseits sowie die abgesenkte Kuppelstellung andererseits gegeben.

Bei der zweiten Sensoreinrichtung kann es sich um wenigstens einen Positionssensor zur Erfassung einer an den Hubarmen des hydraulischen Hubwerks auftretenden Schwenkposition handeln. Der Positionssensor kann dabei als inkrementaler Drehgeber oder als Potentiometer ausgebildet sein, wobei die insoweit bereitgestellten Sensorsignale der Steuereinheit zugeführt werden, sodass diese die Stellbewegung des Hubwerks überwachen und bei Erreichen der durch die angehobene Transportstellung bzw. die abgesenkte Kuppelstellung jeweils gebildeten Endlagen stoppen kann.

Die erfindungsgemäße eine Kupplungsanordnung für einen landwirtschaftlichen Traktor wird im Folgenden anhand der beigefügten Zeichnungen näher erläutert. Hierbei beziehen sich identische Bezugszeichen auf übereinstimmende oder bezüglich ihrer Funktion vergleichbare Komponenten. Es zeigen:
- Fig. 1: ein Ausführungsbeispiel der erfindungsgemäßen Kupplungsanordnung in einer perspektivischen Seitenansicht, und
- Fig. 2: eine seitliche Aufsicht der in Fig. 1 wiedergegebenen Kupplungsanordnung.

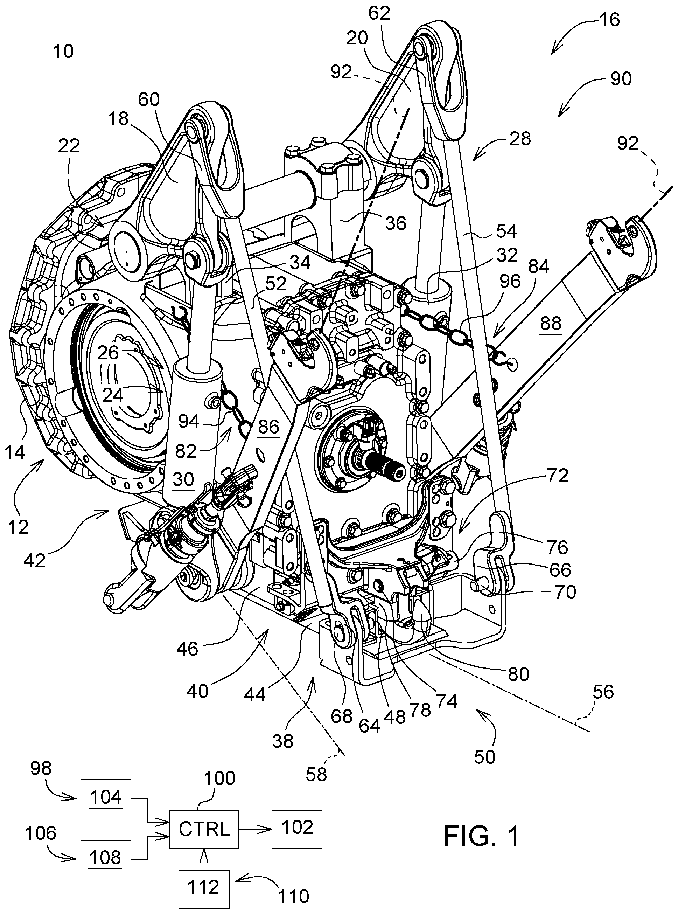

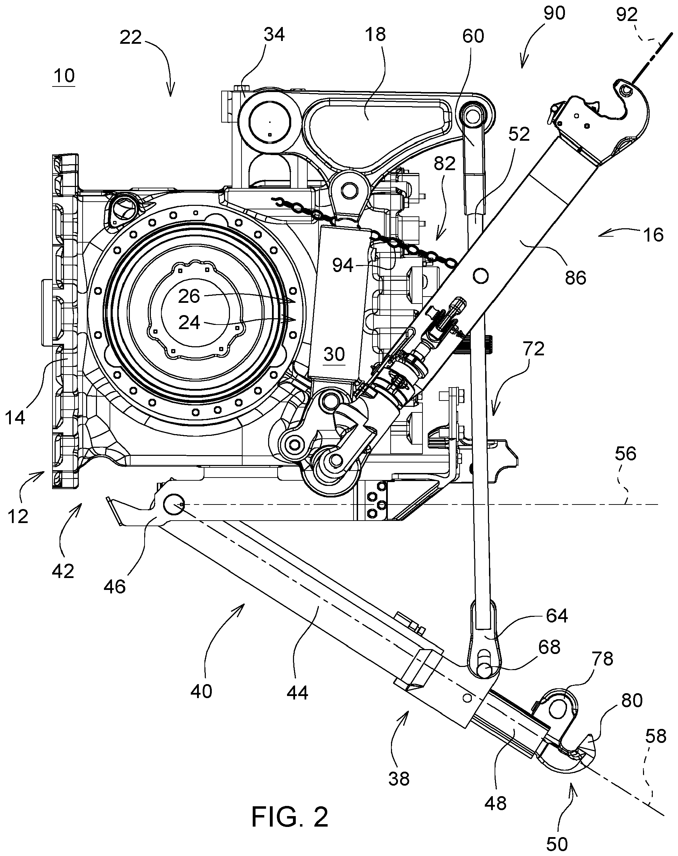

In Fig. 1 und 2 ist jeweils eine Teilansicht eines von einem herkömmlichen landwirtschaftlichen Traktor 10 umfassten Heckbereichs 12 dargestellt, genauer gesagt eines Hinterachsdifferentialgehäuses 14. Hierbei sind umliegende Komponenten, wie Hinterräder, Achstrichter, etc. nicht wiedergegeben, um die Sichtbarkeit der erfindungsgemäßen Kupplungsanordnung 16 in den Figuren nicht zu beeinträchtigen.

Das Hinterachsdifferentialgehäuse 14 bildet eine zentrale Tragestruktur der Kupplungsanordnung 16. Die Kupplungsanordnung 16 umfasst erste und zweite Hubarme 18, 20, die im Bereich einer Oberseite 22 des Hinterachsdifferentialgehäuses 14 vertikal verschwenkbar angelenkt sind. Ein hydraulisches Hubwerk 24 mit hydraulischen Stellmitteln 26, 28 ermöglicht ein Heben und Senken der Hubarme 18, 20, wobei die hydraulischen Stellmittel 26, 28 als Hydraulikzylinder 30, 32 ausgebildet sind. Die Hydraulikzylinder 30, 32 verlaufen jeweils zwischen einem der beiden Hubarme 18, 20 und einer zugehörigen Befestigungsstelle 34, 36 am Hinterachsdifferentialgehäuse 14.

Des Weiteren weist die Kupplungsanordnung 16 eine Zugvorrichtung 38 auf, die Bestandteil einer Pick-Up Hitch 40 des landwirtschaftlichen Traktors 10 ist. Die Zugvorrichtung 38 befindet sich im Bereich einer Unterseite 42 des Hinterachsdifferentialgehäuses 14 und umfasst ein Rahmenteil 44, das an einer mit dem Hinterachsdifferentialgehäuse 14 verschraubten Basisstruktur 46 vertikal verschwenkbar angebracht ist. In dem Rahmenteil 44 ist ein hydraulisch längsverschiebbares Führungsteil 48 mit einem Kupplungsmittel 50 zur Anbringung eines Anbau- oder Zusatzgeräts gelagert.

Das Rahmenteil 44 ist über starre Hubstangen 52, 54 fester Länge mit den Hubarmen 18, 20 derart verbunden, dass sich dieses mittels des hydraulischen Hubwerks 24 zwischen einer angehobenen Transportstellung 56 und einer abgesenkten Kuppelstellung 58 verschwenken lässt. Letztere ist in Fig. 2 wiedergegeben.

Die beiden starren Hubstangen 52, 54 sind hierbei jeweils einstückig als Schmiedeteile hergestellt. An jedem der beiden Enden der Hubstangen 52, 54 ist ein Befestigungsauge 60, 62, 64, 66 ausgebildet, mittels dessen die Hubstange 52, 54 einenends an einem der Hubarme 18, 20 und andernends an einem seitlich am Rahmenteil 44 hervorspringenden Gelenkbolzen 68, 70 angebracht ist. Zumindest die dem Rahmenteil 44 zugewandten Befestigungsaugen 64, 66 sind jeweils als Langloch ausgebildet, was einen Einbau der starren Hubstangen 52, 54 zwischen den Hubarmen 18, 20 und den Gelenkbolzen 68, 70 am Rahmenteil 44 vereinfacht. Hierzu lassen sich die beiden Hubarme 18, 20 in einen geringfügig abgesenkten Umbauzustand versetzen, in dem ein problemloses Einhängen der 60, 62, 64, 66 möglich ist. Anschließend werden die Hubarme 18, 20 wieder soweit angehoben, dass der Gelenkbolzen 68, 70 mit dem unteren Ende des jeweiligen Langlochs zur Anlage kommt.

Das in dem Rahmenteil 44 längsverschiebbar gelagerte Führungsteil 48 lässt sich mittels eines (nicht gezeigten) Hydraulikzylinders ausfahren, wodurch die Aufnahme eines an dem Kupplungsmittel 50 anzubringenden Anbau- oder Zusatzgeräts in der abgesenkten Kuppelstellung 58 des Rahmenteils 44 vereinfacht wird.

Eine Verriegelungseinrichtung 72 erlaubt es, die Pick-Up Hitch 40 bzw. das Rahmenteil 44 in der angehobenen Transportstellung 56 zu arretieren. Zu diesem Zweck umfasst die Verriegelungseinrichtung 72 einen traktorfesten Verriegelungsbolzen 74, der sich mittels eines in Fig. 1 gezeigten Aktuators 76 an einer am Rahmenteil 44 verlaufenden Halteöse 78 in Eingriff bringen lässt. Die Betätigung des Verriegelungsbolzens 74 seitens des Aktuators 76 erfolgt dabei entweder auf hydraulischem Wege oder aber mittels eines lösbaren Federmechanismus.

Das Kupplungsmittel 50 ist beispielsgemäß als Zughaken 80 ausgebildet, es kann sich aber auch um eine Kupplungskugel oder ein Zugpendel handeln. Das Kupplungsmittel 50 ist lösbar an dem Rahmenteil 44 angebracht, sodass ein Wechsel zwischen verschiedenen Kupplungstypen möglich ist.

Die beiden Hydraulikzylinder 30, 32 sind vorliegend doppeltwirkend ausgebildet. Diese ermöglichen es, über die starren Hubstangen 52, 54 sowie das darüber angelenkte Rahmenteil 44 eine nach unten gerichtete Kraft auf den Zughaken 80 auszuüben. Je nach Bodenverhältnissen besteht dementsprechend die Möglichkeit, den Zughaken 80 in den Erdboden zu pressen, um beispielsweise eine darauf abgelegte Ringöse einer Anhängerdeichsel von unten aufzunehmen.

Des Weiteren umfasst die Kupplungsanordnung 16 eine Halteanordnung 82, 84, die es erlaubt, an dem Hinterachsdifferentialgehäuse 14 angelenkte erste und zweite Unterlenker 86, 88 eines Dreipunkt-Krafthebers 90 in einer angehobenen Außerbetriebsstellung 92, und zwar ungeachtet einer seitens der beiden Hydraulikzylinder 30, 32 ausgeführten Hubwerksbetätigung, zu arretieren.

Genauer gesagt ermöglicht es die Halteanordnung 82, 84, die beim Betrieb der Pick-Up Hitch 40 nicht benötigten Unterlenker 86, 88 des Dreipunkt-Krafthebers 90 in einen hubwerksneutralen Zustand zu verbringen sowie darin zu sichern. Die zwischen den Hubarmen 18, 20 und den Unterlenkern 86, 88 verlaufenden Hubstreben des Dreipunkt-Krafthebers 90 können dazu (wie in der Figur gezeigt) komplett entfernt sein.

Bei der Halteanordnung 82, 84 handelt es sich beispielsgemäß um im Heckbereich 12 des Hinterachsdifferentialgehäuses 14 angebrachte Ketten 94, 96, an denen der jeweilige Unterlenker 86, 88 in seiner angehobenen Außerbetriebsstellung 92 mittels eines Karabiners oder dergleichen einhängbar ist.

Des Weiteren umfasst das hydraulische Hubwerk 24 eine erste Sensoreinrichtung 98 zur Ermittlung einer Lastgröße, die eine auf das Kupplungsmittel 50 wirkende Vertikal- bzw. Stützlast F_{L} charakterisiert. Die von der ersten Sensoreinrichtung 98 bereitgestellte Lastgröße wird einer Steuereinheit 100 in Form entsprechender Sensorsignale zugeführt, wobei die Steuereinheit 100 diese dahingehend auswertet, ob eine über das Kupplungsmittel 50 von einem Anbau- oder Zusatzgerät auf die Pick-Up Hitch 40 ausgeübte Vertikal- bzw. Stützlast F_{L} innerhalb zulässiger Grenzen liegt. Im Falle einer von der Steuereinheit 100 erkannten Lastüberschreitung erfolgt die Ausgabe eines entsprechenden Bedienerhinweises. Hierzu kommuniziert die Steuereinheit 100 mit einer in einer Fahrerkabine des landwirtschaftlichen Traktors 10 vorgesehenen akustischen und/oder visuellen Nutzerschnittstelle 102. Entsprechende Maßnahmen können auch für den umgekehrten Fall vorgesehen sein, dass mittels der doppeltwirkenden Hydraulikzylinder 30, 32 über die starren Hubstangen 52, 54 eine nach unten gerichtete Kraft auf den Zughaken 80 ausgeübt werden soll. Eine insofern auftretende Biegebeanspruchung der starren Hubstangen 50, 52 kann so in zulässigen Grenzen gehalten werden.

Bei der ersten Sensoreinrichtung 98 handelt es sich um wenigstens einen Drucksensor 104 zur Erfassung eines in wenigstens einem der Hydraulikzylinder 30, 32 des hydraulischen Hubwerks 24 auftretenden Arbeitsdrucks, genauer gesagt der in einem lastseitigen Arbeitsraum des betreffenden Hydraulikzylinders 30, 32 auftretenden Druckverhältnisse.

Daneben umfasst das hydraulische Hubwerk 24 eine zweite Sensoreinrichtung 106 zur Überwachung eines an dem Rahmenteil 44 einzuhaltenden Schwenkbereichs. Letzterer ist durch die angehobene Transportstellung 56 einerseits sowie die abgesenkte Kuppelstellung 58 andererseits gegeben. Der insofern einzuhaltende Schwenkbereich wird werksseitig vorgegeben und in der Steuereinheit 100 in Form entsprechender Kalibrierdaten hinterlegt.

Bei der zweiten Sensoreinrichtung 106 handelt es sich um wenigstens einen Positionssensor 108 zur Erfassung einer an den Hubarmen 18, 20 des hydraulischen Hubwerks 24 auftretenden Schwenkposition. Der Positionssensor 108 ist dabei als inkrementaler Drehgeber oder als Potentiometer ausgebildet, wobei die insoweit bereitgestellten Sensorsignale der Steuereinheit 100 zugeführt werden, sodass diese die Stellbewegung des hydraulischen Hubwerks 24 überwachen und bei Erreichen der durch die angehobene Transportstellung 56 bzw. die abgesenkte Kuppelstellung 58 jeweils gebildeten Endlagen stoppen kann.

Eine dritte Sensoreinrichtung 110 dient der Erfassung des Betätigungszustands der Verriegelungseinrichtung 72. Um einem Abknicken der starren Haltestangen 50, 52 vorzubeugen, wird ein Verschwenken des Rahmenteils 44 durch Ausfahren der doppeltwirkenden Hydraulikzylinder 30, 32 von der Steuereinheit 100 ausschließlich dann freigegeben, wenn sich aufgrund des sensorisch erfassten Betätigungszustands der Verriegelungseinrichtung 72 ergibt, dass die Arretierung des Rahmenteils 44 gelöst ist, also der Verriegelungsbolzen 74 außer Eingriff mit der Halteöse 78 steht. Bei der dritten Sensoreinrichtung 110 handelt es sich um einen abhängig von der Stellung des Verriegelungsbolzens 76 betätigten Sensorschalter 112, dessen Schaltsignale der Steuereinheit 110 zur Auswertung zugeführt werden.

Eine Inbetriebnahme der Pick-Up Hitch 40 wird von der Steuereinheit 100 nur dann freigegeben, wenn der Bediener den korrekten Einbau der beiden Hubstangen 52, 54 vorab über eine von der Nutzerschnittstelle 102 umfasste Eingabeeinheit ausdrücklich bestätigt hat. Auf diese Weise wird vermieden, dass das Rahmenteil 44 beim Lösen der Verriegelungseinrichtung 72 ungehindert in Richtung des Erdbodens herabfallen kann.

Entsprechendes gilt für den Fall, dass die Hubstangen 52, 54 abgenommen sowie die beiden Hubarme 18, 20 in den hierfür vorgesehenen abgesenkten Umbauzustand verbracht werden sollen. Die Absenkung in den Umbauzustand erfolgt hier unter dem Vorbehalt, dass das Rahmenteil 44 in der angehobenen Transportposition 56 arretiert ist. Ob dies zutrifft, erkennt die Steuereinheit 100 durch Auswertung der seitens des Sensorschalters 112 zugeführten Schaltsignale.

## Patentansprüche

1. Kupplungsanordnung für einen landwirtschaftlichen Traktor, mit einem Hinterachsdifferentialgehäuse (14), ersten und zweiten Hubarmen (18, 20), die im Bereich einer Oberseite (22) des Hinterachsdifferentialgehäuses (14) vertikal verschwenkbar angelenkt sind, einem hydraulischen Hubwerk (24) zum Heben und Senken der Hubarme (18, 20), und einer Zugvorrichtung (38), die im Bereich einer Unterseite (42) des Hinterachsdifferentialgehäuses (14) angebracht ist und die ein vertikal verschwenkbares Rahmenteil (44) umfasst, in dem ein hydraulisch längsverschiebbares Führungsteil (48) mit einem Kupplungsmittel (50) zur Anbringung eines Anbau- oder Zusatzgeräts gelagert ist, wobei das Rahmenteil (44) über starre Hubstangen (52, 54) fester Länge mit den Hubarmen (18, 20) derart verbunden ist, dass sich dieses mittels des hydraulischen Hubwerks (24) zwischen einer angehobenen Transportstellung (56) und einer abgesenkten Kuppelstellung (58) verschwenken lässt, **dadurch gekennzeichnet, dass** eine Halteanordnung (82, 84) vorgesehen ist, mittels derer an dem Hinterachsdifferentialgehäuse (14) angelenkte erste und zweite Unterlenker (86, 88) eines Dreipunkt-Krafthebers (90) ungeachtet einer Hubwerksbetätigung in einer angehobenen Außerbetriebsstellung (92) arretierbar sind.

2. Kupplungsanordnung nach Anspruch 1, **dadurch gekennzeichnet, dass** das hydraulische Hubwerk (24) eine erste Sensoreinrichtung (98) zur Ermittlung einer Lastgröße umfasst, die eine auf das Kupplungsmittel (50) wirkende Stützlast (F_{L}) charakterisiert.

3. Kupplungsanordnung nach Anspruch 2, **dadurch gekennzeichnet, dass** es sich bei der ersten Sensoreinrichtung (98) um wenigstens einen Drucksensor (104) zur Erfassung eines in einem hydraulischen Stellmittel (26, 28) des Hubwerks (24) auftretenden Arbeitsdrucks handelt.

4. Kupplungsanordnung nach wenigstens einem der vorhergehenden Ansprüche, **dadurch gekennzeichnet, dass** das hydraulische Hubwerk (24) eine zweite Sensoreinrichtung (106) zur Überwachung eines an dem Rahmenteil (44) einzuhaltenden Schwenkbereichs umfasst.

5. Kupplungsanordnung nach Anspruch 4, **dadurch gekennzeichnet, dass** es sich bei der zweiten Sensoreinrichtung (106) um wenigstens einen Positionssensor (108) zur Erfassung einer an den Hubarmen (18, 20) des hydraulischen Hubwerks (24) auftretenden Schwenkposition handelt.

## Claims

1. Coupling arrangement for an agricultural tractor, having a rear axle differential housing (14), first and second lifting arms (18, 20), which are coupled so as to be pivotable vertically in the region of a top side (22) of the rear axle differential housing (14), a hydraulic lifting mechanism (24) for lifting and lowering the lifting arms (18, 20), and a traction device (38) which is attached in the region of a bottom side (42) of the rear axle differential housing (14) and which comprises a vertically pivotable frame part (44), in which a hydraulically longitudinally displaceable guide part (48) with a coupling means (50) for attaching an implement or attachment is mounted, wherein the frame part (44) is connected to the lifting arms (18, 20) via rigid lifting rods (52, 54) of fixed length in such a manner that said frame part can be pivoted by means of the hydraulic lifting mechanism (24) between a raised transport position (56) and a lowered coupling position (58), **characterized in that** a holding arrangement (82, 84) is provided, by means of which first and second lower links (86, 88) of a three-point power lift (90), the lower links being coupled to the rear axle differential housing (14), are lockable in a raised non-use position (92) irrespective of an actuation of the lifting mechanism.

2. Coupling arrangement according to Claim 1, **characterized in that** the hydraulic lifting mechanism (24) comprises a first sensor device (98) for determining a load size which characterizes a supporting load (F_{L}) acting on the coupling means (50).

3. Coupling arrangement according to Claim 2, **characterized in that** the first sensor device (98) is at least one pressure sensor (104) for detecting a working pressure occurring in a hydraulic actuating means (26, 28) of the lifting mechanism (24).

4. Coupling arrangement according to at least one of the preceding claims, **characterized in that** the hydraulic lifting mechanism (24) comprises a second sensor device (106) for monitoring a pivoting range to be maintained at the frame part (44).

5. Coupling arrangement according to Claim 4, **characterized in that** the second sensor device (106) is at least one position sensor (108) for detecting a pivoting position occurring at the lifting arms (18, 20) of the hydraulic lifting mechanism (24).

## Revendications

1. Ensemble d'accouplement pour un tracteur agricole, avec un boîtier de différentiel d'essieu arrière (14), des premier et deuxième bras de levage (18, 20) qui sont articulés de manière à pouvoir pivoter verticalement dans la zone d'un côté supérieur (22) du boîtier de différentiel d'essieu arrière (14), un mécanisme de levage hydraulique (24) pour lever et abaisser les bras de levage (18, 20), et un dispositif de traction (38) qui est placé dans la zone d'un côté inférieur (42) du boîtier de différentiel d'essieu arrière (14) et qui comprend une partie de cadre (44) pouvant pivoter verticalement, dans laquelle est montée une partie de guidage (48) pouvant être déplacée longitudinalement par voie hydraulique avec un moyen d'accouplement (50) pour la mise en place d'un appareil rapporté ou supplémentaire, la partie de cadre (44) étant reliée aux bras de levage (18, 20) par le biais de barres de levage rigides (52, 54) de longueur fixe de telle sorte que celle-ci peut être pivotée au moyen du mécanisme de levage hydraulique (24) entre une position de transport relevée (56) et une position d'accouplement abaissée (58), **caractérisé en ce qu'**il est prévu un ensemble de retenue (82, 84) au moyen duquel des premier et deuxième bras inférieurs (86, 88) d'un attelage à trois points (90), articulés sur le boîtier de différentiel d'essieu arrière (14), peuvent être bloqués dans une position relevée hors service (92), indépendamment d'un actionnement du mécanisme de levage.

2. Ensemble d'accouplement selon la revendication 1, **caractérisé en ce que** le mécanisme de levage hydraulique (24) comprend un premier dispositif de détection (98) pour déterminer une grandeur de charge qui caractérise une charge d'appui (F_{L}) agissant sur le moyen d'accouplement (50).

3. Ensemble d'accouplement selon la revendication 2, **caractérisé en ce que** le premier dispositif de détection (98) est au moins un capteur de pression (104) pour détecter une pression de travail apparaissant dans un moyen de réglage hydraulique (26, 28) du mécanisme de levage (24).

4. Ensemble d'accouplement selon au moins l'une quelconque des revendications précédentes, **caractérisé en ce que** le mécanisme de levage hydraulique (24) comprend un deuxième dispositif de détection (106) pour surveiller une plage de pivotement à respecter sur la partie de cadre (44).

5. Ensemble d'accouplement selon la revendication 4, **caractérisé en ce que** le deuxième dispositif de détection (106) est au moins un capteur de position (108) pour détecter une position de pivotement se produisant sur les bras de levage (18, 20) du mécanisme de levage hydraulique (24).
